# EUROPEAN PATENT SPECIFICATION

(11) **EP 0 547 170 B1**
(45) Date of publication and mention of the grant of the patent: **08.11.1995**
(21) Application number: 91918476.2
(22) Date of filing: 05.09.1991
(51) Int. Cl.: G02B 26/10, H04N 1/04

(54) **SCANNER APPARATUS**
ABTASTAPPARAT
APPAREIL A BALAYAGE

(30) Priority: 06.09.1990 US 578162
(43) Date of publication of application: 23.06.1993
(73) Proprietor: EASTMAN KODAK COMPANY, Rochester, New York 14650-2201 (US)
(72) Inventor: NOETHEN, Mark, Lee, Rochester, NY 14610 (US)
(74) Representative: Buff, Michel
(86) International application number: US9106294
(87) International publication number: WO9204652

(56) References cited:
- EP-A- 0 269 450
- WO-A-85/05750
- US-A- 3 999 010
- PATENT ABSTRACTS OF JAPAN vol. 9, no. 50 (P-339)(1773) 5 March 1985 & JP-A-59188 615

## Description

This invention relates to scanner apparatus, and more particularly, to such apparatus which is adapted to precisely position a series of scan lines on a receiving medium.

It is common in scanner apparatus which deflect a beam with a polygon or hologon to use some type of line-start device to accurately position the start of each raster line at the image plane. If a line-start device is not used, variations in the speed of the deflector can cause a ragged edge in an image produced by the scanner. Line-start systems normally use a photodetector which is adapted to detect a scanned beam at some predetermined position, and to provide a signal to a control system. It is usually not feasible to locate the detector in the image plane, and thus, various schemes have been used to intercept the scanned beam and direct it to a detector located remote from the image plane. One example of a line-start detector is shown in U.S. Pat. No. 4,720,632.

U.S. Pat. No. 4,720,632 discloses a synchronizing light beam detector comprising a plano pickoff mirror which intercepts the beam at a predetermined position and directs the beam to a cylindrical lens. The cylindrical lens focuses the beam onto a photoelectric element. The cylindrical lens and the photoelectric element are mounted in a closed holder to precisely position the elements relative to each other and to protect the elements from the adverse effects of stray light. One of the main problems with the arrangement shown in the patent is that it requires a number of optical elements, and certain of these elements must be precisely positioned in a special holder.

EP-A-269 450 describes an optical beam scanner, for example for use in a laser beam printer. A problem with the approach described in this document is that nothing is provided to produce a line-start signal which could be used to control the modulation of the input beam.

WO 85/05750 and JP-A-59-188615 describe other approaches that do not solve the above mentioned problem.

It is an object of the present invention as recited in claim 1 to overcome the problems in the prior art discussed above and to provide improved scanner apparatus.

In one embodiment of the present invention, the scanner apparatus comprises a polygon scanner which is adapted to scan a beam across a receiving medium such as a photographic film. A light source such as a diode laser is adapted to provide an input beam to shaping optics which direct the beam to the polygon. The beam is reflected off the polygon to an f-Θ lens, and from the f-Θ lens, the beam passes to a cylindrical mirror. The cylindrical mirror directs the beam onto the receiving medium and serves to image a facet of the polygon on the receiving medium in the cross-scan direction. A second cylindrical mirror is positioned to intercept the beam from the f-Θ lens at a position prior to the start of a raster line on the receiving medium. The second cylindrical mirror directs the beam to a photodetector which produces a line-start signal that is used to control the modulation of the input beam.

A principal advantage of the present invention is that it provides a relatively simple and accurate means for sensing the position of a scanned beam of radiation. The disclosed apparatus minimizes unwanted stray light, uses only one achromatic optical element to direct light to the photodetector, and substantially corrects polygon pyramidal angle errors on the detector. The optical elements in the disclosed apparatus are easy to align and adjust, and the cylindrical mirror that is used to direct the beam to the photodetector provides the proper beam waist size at the photodetector.

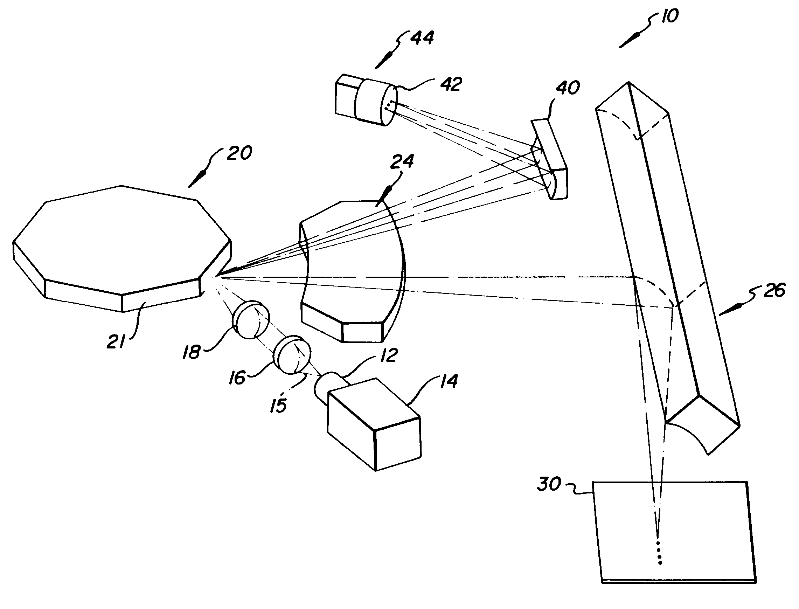

Embodiments of the present invention will now be described, by way of example, with reference to the accompanying drawing showing a perspective view of the scanner apparatus of the present invention.

With reference to the drawing, there is shown scanner apparatus 10 constructed in accordance with the present invention. Apparatus 10 comprises a source of radiation such as a diode laser 12. Laser 12 is modulated by means of a laser driver 14, and the laser 12 provides a beam of radiation 15 to a collimator lens 16. From lens 16, the beam 15 passes to a beam-shaping lens such as cylindrical lens 18.

Cylindrical lens 18 directs the beam 15 to a rotatable polygon 20. Polygon 20 directs the beam 15 to an f-Θ lens 24, and from lens 24, the beam passes to a cylindrical mirror 26 which directs the beam onto a receiving medium 30. Receiving medium 30 can be any medium sensitive to radiation, for example, photographic film. Receiving medium 30 can be advanced in a cross-scan direction by means of, for example, a reciprocating platen (not shown) which is operated in timed relation to the movement of the beam in the scan direction.

F-Θ lens 24 can be constructed as disclosed in International Application No. WO91/06028, published May 2, 1991 and constituting prior art within the meaning of Article 54(3)EPC. Cylindrical mirror 26 can be a mirror having a radius of 278.10 mm which is obtainable from J.L. Wood Co., California.

In the present invention, polygon 20 can have eight mirror facets 21. Polygon 20 is of a type which can be constructed, using known construction methods, with facet pyramidal angle errors of less than ±30 arc seconds. Scanner apparatus 10 is adapted to desensitize the system to the effects of small pyramidal angle errors on individual facets 21 of the polygon 20. Pyramidal angle errors will divert the reflected beam in the cross-scan direction. In general, this will cause the scanning spot at the receiving medium 30 to be displaced in the cross-scan direction and may produce a phenomenon known as banding in an image. The effects of pyramidal angle errors are overcome in scanner apparatus 10 by utilizing cylindrical mirror 26 to make the reflecting facet 21 optically conjugate with the recording medium 30. As will be explained hereinafter, the effects of pyramidal angle errors are also substantially overcome in the detection of a line-start signal by using a cylindrical mirror 40 as a pickoff mirror for the line-start signal.

In order to provide a line-start signal in scanner apparatus 10, cylindrical mirror 40 is positioned, as shown in the drawing, to intercept the beam 15 from polygon 20 just prior to the start of a scan line. Cylindrical mirror 40 directs the beam 15 to a surface 42 of photodetector 44. Cylindrical mirror 40 can be a mirror having a radius of 216.50 mm which is obtainable from the Harold Johnson Co., California.

In a preferred embodiment of the present invention, mirror 40 is positioned to precisely control the size of the beam in the cross-scan direction at the surface 42 and to substantially conjugate a facet 21 of polygon 20 to the surface 42 of photodetector 44. The size of the beam in the cross-scan direction at surface 42 is controlled by positioning the mirror 40 such that the beam waist in the cross-scan direction is located at the surface 42; when the mirror 40 is so positioned, successive scan displacements on surface 42 in the cross-scan direction as a result of pyramidal angle errors are so small, compared to the dimensions of the detector, that no artifacts are produced in the line-start signal. It is also possible, by accepting a less than optimal beam size in the cross-scan direction at surface 42, to position the mirror 40 to conjugate a facet 21 of polygon 20 to the surface 42. In apparatus 10, both the surface 42 of photodetector 44 and the receiving medium 30 are located the same distance from the polygon 20. This arrangement is necessary so that the beam will be focussed in the scan direction on both the receiving medium 30 and the surface 42.

Photodetector 44 is adapted to produce a line-start signal when the scanned beam is in a predetermined position. Signals from photodetector 44 are processed in a control system (not shown) which can be a control system such as the one disclosed in International Appliction No. W091/06029, published May 2, 1991 and constituting prior art within the meaning of Article 54(3)EPC. Photodetector 44 can be a UDT quad detector, manufactured by United Detector Technology.

## Claims

1. Scanner apparatus comprising:
a light source (12) for producing a beam of radiation;
deflector means (20) for deflecting said beam through a plurality of positions;
a cylindrical mirror (40) positioned to intercept the beam from said deflector means (20) as it passes through a predetermined position; and
detector means (44) for producing a signal when a beam from said cylindrical mirror (40) strikes a surface (42) of said detector means,
characterized in that said cylindrical mirror (40) optically conjugates a deflecting surface (21) of said deflector means (20) with said surface (42) of the detector means (44) in the cross-scan direction.

2. Scanner apparatus, as defined in claim 1, wherein said apparatus includes means (26) for focusing the deflected beam onto a receiving medium (30).

3. Scanner apparatus, as defined in claim 2, wherein said focusing means is a cylindrical mirror (26).

4. Scanner apparatus, as defined in claim 3, wherein said detector means (44) and said receiving medium (30) are each located substantially at the same distance from said deflector means (20).

## Patentansprüche

1. Scanner mit
einer Lichtquelle (12) zum Erzeugen eines Strahlenbündels,
einem Strahlablenker (20) zum Ablenken des Strahlenbündels in eine Vielzahl von Richtungen,
einem ersten Zylinderspiegel (40), der so positioniert ist, daß er das vom Strahlablenker (20) reflektierte Strahlenbündel auffängt, wenn dieses auf eine bestimmte Position gerichtet ist, und
einer Detektoreinrichtung (44) zum Erzeugen eines Signals, wenn ein vom Zylinderspiegel (40) reflektiertes Strahlenbündel auf eine Fläche (42) der Detektoreinrichtung trifft,
**dadurch gekennzeichnet,** daß der Zylinderspiegel (40) eine der Ablenkflächen (21) des Strahlablenkers (20) mit der Fläche (42) der Detektoreinrichtung (44) senkrecht zur Abtastrichtung optisch konjugiert.

2. Scanner nach Anspruch 1, dadurch gekennzeichnet, daß Mittel (26) vorgesehen sind, die das abgelenkte Strahlenbündel auf ein Empfangsmedium (30) fokussieren.

3. Scanner nach Anspruch 2, dadurch gekennzeichnet, daß es sich bei den Fokussiermitteln um einen Zylinderspiegel (26) handelt.

4. Scanner nach Anspruch 3, dadurch gekennzeichnet, daß die Detektoreinrichtung (44) und das Empfangsmedium (30) in im wesentlichen jeweils gleichen Abständen zum Strahlablenker (20) angeordnet sind.

## Revendications

1. Appareil de balayage, comprenant :
une source lumineuse (12) destinée à produire un faisceau d'un rayonnement,
un dispositif déflecteur (20) destiné à dévier le faisceau dans plusieurs positions,
un miroir cylindrique (40) disposé afin qu'il intercepte le faisceau provenant du dispositif déflecteur (20) lorsqu'il passe à une position prédéterminée, et
un dispositif détecteur (44) destiné à produire un signal lorsqu'un faisceau provenant du miroir cylindrique (40) frappe une surface (42) du dispositif détecteur,
caractérisé en ce que le miroir cylindrique (40) conjugue optiquement une surface déflectrice (21) du dispositif déflecteur (20) à la surface (42) du dispositif détecteur (44) dans la direction de balayage transversal.

2. Appareil de balayage selon la revendication 1, dans lequel l'appareil comporte un dispositif (26) de focalisation du faisceau dévié sur un support récepteur (30).

3. Appareil de balayage selon la revendication 2, dans lequel le dispositif de focalisation est un miroir cylindrique (26).

4. Appareil de balayage selon la revendication 3, dans lequel le dispositif détecteur (44) et le support récepteur (30) sont placés chacun pratiquement à la même distance du dispositif déflecteur (20).
